# FASCICULE DE BREVET EUROPEEN

(11) **EP 0 648 599 B1**
(45) Date de publication et mention de la délivrance du brevet: **30.07.1997**
(21) Numéro de dépôt: 94116354.5
(22) Date de dépôt: 17.10.1994
(51) Int. Cl.: B31F 1/20, B32B 31/00, F26B 13/28, B31F 1/28

(54) **Dispositif pour la mise en charge d'un tapis presseur dans une machine pour la fabrication du carton ondulé**
Vorrichtung zur Belastung eines Pressbandes in einer Maschine zur Herstellung von Wellpappe
Device for loading a pressing band in a machine for the fabrication of corrugated cardboard

(30) Priorité: 19.10.1993 CH 3152/93
(43) Date de publication de la demande: 19.04.1995
(73) Titulaire: PETERS MASCHINENFABRIK GmbH, 22525 Hamburg (DE)
(72) Inventeur: Teschner, Klaus, D-22337 Hambourg (DE)
(74) Mandataire: Colomb, Claude

(56) Documents cités:
- EP-A- 0 559 181
- DE-A- 1 923 858
- FR-A- 1 291 892
- US-A- 4 947 559

## Description

La présente invention concerne un dispositif pour la mise en charge d'un tapis presseur dans une machine pour la fabrication du carton ondulé, comprenant une ou plusieurs tables chauffantes inférieures sur la surface desquelles se déplace une bande de carton ondulé, dont la bande de papier de recouvrement supérieure vient d'être déposée sur les ondulations préalablement encollées, un tapis presseur se déplaçant à la même vitesse linéaire que la bande de carton ondulé en appuyant sur la bande de papier de recouvrement et des organes de mise en charge du tapis presseur agissant sur le tapis presseur.

De tels dispositifs se rencontrent, dans la pratique, dans la section de chauffage de la partie appelée double face des machines de fabrication du carton ondulé. Dans cette partie de la machine, l'assemblage collé des bandes lisses de couverture supérieure et inférieure et ondulée, constituant le carton ondulé, subit un chauffage destiné à la fois à assurer le collage définitif des différentes bandes et leur séchage. Ce chauffage est couramment réalisé en faisant passer la bande de carton ondulé sur une série de plaques chauffantes, en fonte ou en acier, chauffées le plus souvent à l'aide de vapeur d'eau circulant à l'intérieur des plaques chauffantes.

La bande de carton ondulé est maintenue au contact des plaques chauffantes par un tapis presseur sans fin dont le brin inférieur appuie sur la bande de papier de recouvrement supérieure de la bande de carton ondulé. La pression du tapis presseur est amplifiée par des rouleaux, tournant librement, montés dans des glissières ou sur des leviers articulés, de telle sorte qu'ils reposent sur le tapis presseur qui assure ainsi une répartition au moins approximative de leur poids sur la bande de carton ondulé. De façon à optimaliser la pression de contact du carton ondulé sur les plaques chauffantes, on associe à chaque organe de support des rouleaux un vérin alimenté en fluide sous pression ce qui permet de modifier par variation de la pression de contact la vitesse de la transmission thermique entre les plaques chauffantes et la bande de carton ondulé. Un tel dispositif est décrit en détail dans le brevet français N° 1592115.

Le principal inconvénient d'un tel dispositif réside dans le fait qu'il est difficile, voir très aléatoire, de concilier la pression exercée sur le tapis par les rouleaux avec le choix de la vitesse de transmission thermique pour obtenir un séchage acceptable sans provoquer des déformations inacceptable de la bande de carton ondulé en écrasant plus ou moins les cannelures de celle-ci.

Pour éviter ce phénomène, le praticien a imaginé de remplacer les rouleaux par une série de caissons à pression alimentés en air comprimé. La poussée exercée par l'air comprimé des caissons presse ainsi le tapis presseur contre la bande de carton ondulé de manière uniforme tout en permettant un réglage de la poussée en faisant varier la pression d'air dans les différents caissons. Le brevet américain N° 4947559 donne de plus amples information au sujet d'un dispositif de ce genre.

On rencontre également dans la pratique un autre dispositif utilisant lui aussi des caissons a pression dans lesquels on a monté une plaque mobile fermant pratiquement toute la partie inférieure des caissons de façon à ce que la pression soit transmise mécaniquement au tapis presseur de manière à obtenir une meilleure répartition de la pression sur celui-ci.

Ainsi que déjà mentionné, l'utilisation de rouleaux et de vérins pour assister l'effort de pression sur le tapis presseur provoque la déformation de la bande de carton ondulé. Cependant cette solution permet l'évacuation de l'humidité provenant de l'évaporation de l'eau contenue dans la colle ayant servi à assembler les différentes bandes de papier constituant la bande de carton ondulé, ce qui est une nécessité absolue pour obtenir une qualité de carton ondulé acceptable.

Les deux autres dispositifs décrits ci-avant présentent quant à eux un avantage certain en ce qui concerne l'absence de déformation du carton ondulé mais entravent dans une large mesure l'évacuation de l'humidité, ce qui n'est pas acceptable dans le cas de la fabrication d'un carton ondulé d'excellente qualité.

Le but de la présente invention vise à éliminer les inconvénients précités en procurant un dispositif de mise en pression dans lequel la bande de carton ondulé ne soit pas déformée lors de sa mise en pression tout en autorisant un évacuation optimale de son humidité lors du séchage.

A cet effet, le dispositif de mise en pression est conforme à ce qu'énonce la revendication 1.

L'invention sera mieux comprise à l'aide des dessins annexés dans lesquels,
- la figure 1 est une vue schématique en coupe d'une partie d'un organe de pression,
- la figure 2 représente un deuxième exemple de réalisation d'un organe de pression,
- la figure 3 représente un troisième exemple de réalisation d'un organe de pression,
- la figure 4 représente un quatrième exemple de réalisation d'un organe de pression,
- la figure 5 représente une première forme de réalisation de l'organe de pression de la figure 4,
- la figure 6 représente une deuxième forme de réalisation de l'organe de pression de la figure 4 et,
- la figure 7 est une vue en plan de la disposition des organes de pression dans la section de chauffage de la machine.

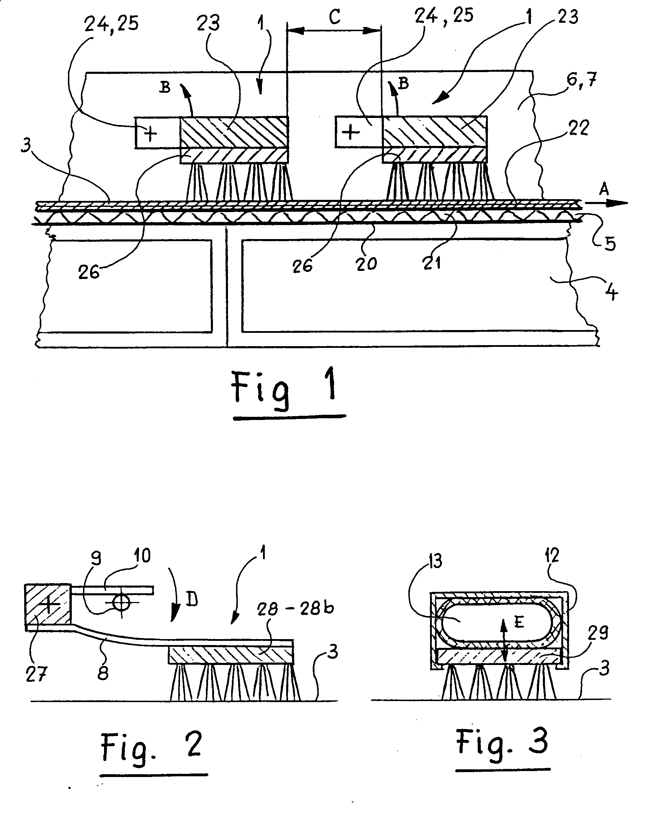

La figure 1 est une vue schématique en coupe d'une partie d'un organe de pression 1 aménagé dans la section de chauffage d'une machine de fabrication de carton ondulé.

Cette section de chauffage comprend en général une séries de tables chauffantes 4 se présentant sous la forme d'éléments tubulaires s'étendant entre les bâtis latéraux 6, 7 de la machine. Ces tables chauffantes sont amenées à la température désirée en faisant circuler de la vapeur à l'intérieur de chacune d'elles. La bande de carton ondulé 5 est composée d'une bande de recouvrement inférieure 20 sur laquelle est collée par les sommets de ses ondulations une bande ondulée 21 et d'une bande de recouvrement supérieure 22 elle aussi collée sur les sommets correspondants de la bande ondulée 21. En vue de son séchage, la bande de carton ondulé 5 se déplace, dans le sens indiqué par la flèche A, sur la partie supérieure des tables chauffantes 4 et pour améliorer la transmission de la chaleur dispensée par les tables chauffantes 4, elle est pressée plus ou moins fortement contre la face supérieure des tables chauffantes 4 au moyen d'un tapis presseur 3 associé à des organes de pression 1. Dans l'exemple de la figure 1, ces organes de pression sont constitués par des éléments autorisant la diffusion de l'humidité provenant du séchage de la bande de carton ondulé 5. Ces éléments comprennent entre autres des barres transversales 23, s'étendant sur toute la largeur de la section de chauffage de la machine de fabrication de carton ondulé, qui sont équipées, à chacunes de leurs extrémités, d'un levier 24, respectivement 25, dont l'axe de pivotement est aménagé dans chacun des bâtis latéraux 6 et 7 et chacune des barres 23 est munie, à sa partie inférieure, d'une brosse 26 ayant la même longueur que la barre transversale 23. Cette brosse, dont ont choisira la dureté en fonction de l'effort de pression que l'on désire appliquer au brin inférieur du tapis presseur 3, transmettra mécaniquement la force de pression résultant du poids de l'ensemble barre-brosse au tapis presseur 3. Pour tenir compte des différentes conditions de pression que l'on désire appliquer de cas en cas au tapis presseur 3, il convient de pouvoir mettre hors service l'un ou l'autre des ensembles barre-brosse. A cet effet, on prévoit un espacement suffisant C entre chaque ensemble barre-brosse de façon à ce que l'on puisse faire pivoter l'ensemble barre-brosse vers le haut en direction de la flèche B pour finalement l'amener dans une position verticale représentant la position hors service de celui-ci.

On pourrait aussi imaginer d'utiliser une série d'organes de pression 1 indépendants l'un de l'autre montés chacun sur un levier pivotant autour d'un arbre transversal s'étendant d'un bâti latéral 6, 7 à l'autre.

La figure 2 représente un exemple de réalisation d'un organe de pression 1 en version simplifiée. Dans cette exécution, on utilise une poutre transversale 27 s'étendant entre les bâtis latéraux 6, 7 pour supporter des brosses 28 à 28b ayant une longueur différente. La poutre transversale 27 est montée, de façon à pouvoir pivoter autour de son axe, entre les deux bâtis latéraux 6, 7. La poutre transversale 27 comporte aussi, à ses extrémités, des moyens de serrage (non représentés) de façon à ce que l'on puisse la bloquer en position angulaire pour transmettre la force donnée par le ressort 8 au tapis presseur 3. Chaque brosse 28 à 28b est fixée à l'une des extrémités d'une lame ressort 8 dont l'autre extrémité est rendue solidaire, par exemple à l'aide de vis, à la poutre transversale 27. Dans le but de pouvoir ajuster la pression exercée sur le tapis presseur 3 par la lame ressort 8 et par le poids des brosses 28 à 28b, cela en fonction de l'épaisseur de la bande de carton ondulé 5, on prévoit de monter à chaque extrémité de la poutre transversale 27 une goupille d'arrêt 10 venant s'appuyer contre une butée 9, cela pour limiter la course, en direction de la flèche D, des brosses 28 à 28b. Afin d'obtenir une plage de réglage plus importante, on pourrait imaginer, par exemple, de réaliser la butée 9 sous la forme d'un tourillon excentrique.

Il est bien entendu que la goupille d'arrêt 10 et la butée 9 doivent être disposées au voisinage des bâtis latéraux 6, 7 de telle façon à ce qu'elles n'entravent pas le pivotement vers le haut des brosses afin que celles-ci puissent être amenées en position hors service ainsi que déjà mentionné en référence avec la description de la figure 1.

La figure 3 représente un troisième exemple de réalisation d'un organe de pression 1 et plus particulièrement la réalisation du dispositif de réglage de la pression de la brosse 29 sur le tapis presseur 3. La brosse 29 est dans ce cas montée, de manière à pouvoir coulisser verticalement dans la direction représentée par la double flèche E, dans une poutrelle tubulaire 12 à l'intérieur de laquelle est disposée une chambre expansible 13 sous l'effet d'un fluide tel que par exemple de l'air comprimé. Dans cette exécution, le réglage de la pression de la brosse 29 sur le tapis presseur 3 s'effectue en faisant varier la pression du fluide dans la chambre expansible 13 ce qui va permettre de presser plus ou moins fortement la brosse 29 sur le tapis presseur 3. La poutrelle tubulaire 12 sera, dans cet exemple reliée à la poutre transversale 27 non plus par une lame ressort mais par une ou plusieurs barrettes rigides (non représentées), la course de la poutre transversale 27 étant limitée au moyen des mêmes éléments que ceux décrits en référence avec la figure 2. Il est à remarquer que cette solution autorise également l'utilisation de brosses de longueur différentes. Il suffit pour cela de positionner chacune des différentes brosses le long de la poutrelle tubulaire 12 à l'aide par exemple de petites pièces d'arrêt (non représentées) rapportées à l'intérieur de la poutrelle tubulaire 12.

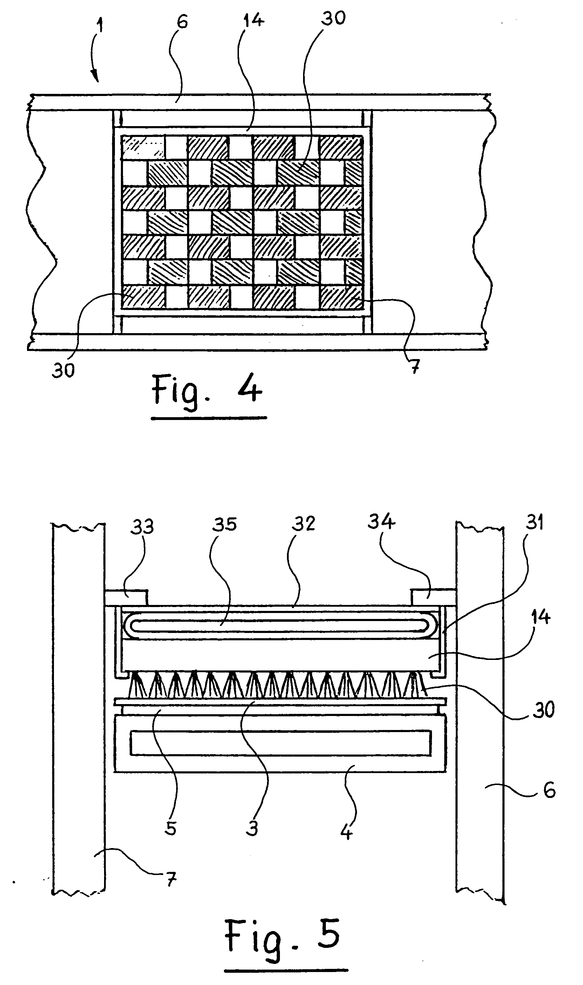

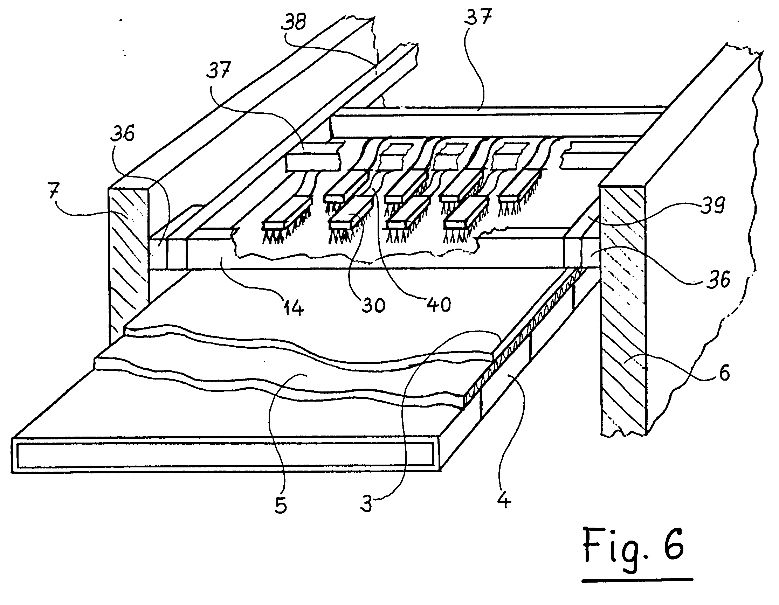

La figure 4 représente un quatrième exemple de réalisation d'un organe de pression 1 dans lequel les brosses 30 sont montées dans un cadre 14 logé entre les bâtis latéraux 6, 7. Dans cette version, les brosses 30 sont disposées en damier de façon à ce que des espaces libres subsistent entre chacune d'elles. Dans cette disposition, le cadre 14 peut être relié aux bâtis latéraux 6, 7 par des moyens permettant d'ajuster la pression des brosses 30 sur le tapis presseur 3. Une forme de réalisation de ces moyens est décrite en référence avec les figures 5 et 6. Sur la figure 5, le cadre 14 supportant les brosses 30 est monté, de façon à pouvoir coulisser verticalement, dans un berceau 31 fermé, à sa partie supérieure par une tôle 32 et muni, à sa partie inférieure de plaquettes d'arrêt pour limiter la course verticale vers le bas du cadre 14 supportant les brosses 30. Le cadre 14 comporte également des coulisses (non représentées) pour positionner chacune des brosses 30 l'une par rapport à l'autre. Le berceau 31 est en outre fixé aux bâtis latéraux 6, 7 par des pattes de fixation 33 et 34. La pression est transmise aux brosses 30 à l'aide d'une chambre de pression 35 disposée entre la partie supérieure du cadre 14 et la tôle de fermeture du berceau 31.

La figure 6 est une vue en perspective, en coupe partielle, d'une autre manière de réaliser le montage des brosses 30 dans le cadre 14. Dans cette version, le cadre 14 est fixé contre la face intérieure des bâtis 6, 7 au moyen de vis et d'entretoises 36. Des barres transversales 37 sont montées entre les longerons 38, 39 du cadre 14 de façon à pouvoir pivoter, cela de la même façon que cela a été décrit en relation avec la figure 2. Ainsi que représenté, les brosses 30 sont fixées aux barres transversales 37 par des lames ressort 40 et pourront appliquer une pression déterminée sur le tapis presseur 3. Pour la simplification du dessin, seule deux rangées de brosses 30 ont été représentées mais il est évident que le dispositif comporte une pluralité de rangées de brosses comme cela est représenté à la figure 4.

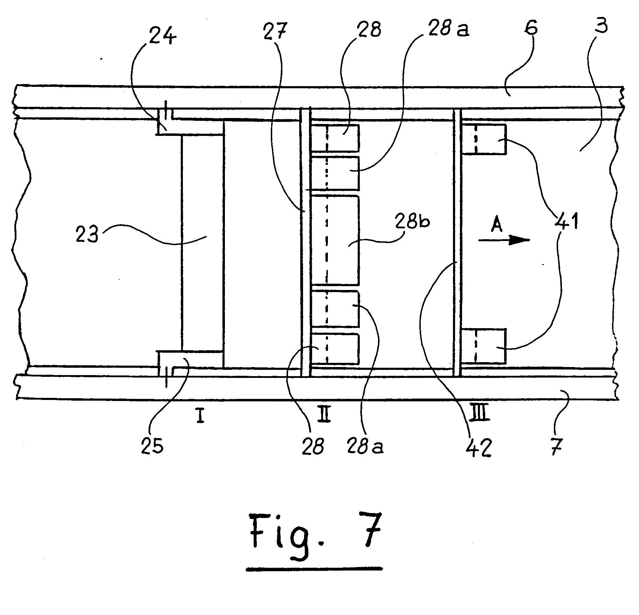

La figure 7 est une vue en plan de la disposition des organes de pression 1 dans la section de chauffage de la machine. Cette figure montre la disposition possible des brosses au dessus du tapis presseur 3. Les brosses 26 portées par les barres transversales 23 s'étendent sur toute la largeur du tapis presseur 3. Les brosses 28 à 28b sont de longueurs différentes de façon à pouvoir exercer une pression différenciée sur le tapis presseur 3 en modifiant la caractéristique des lames ressort 8 (voir figure 2) en fonction de la pression désirée. Enfin, il se peut que pour des travaux particuliers, seules les brosses 41 de la barre transversale 42 soient utilisées.

Il est à remarquer que l'utilisation de brosses de duretés différentes permet aussi d'ajuster la pression sur le tapis presseur 3. D'autre part, l'emploi de brosses à l'exclusion de tout autre moyen de pression assure une parfaite évacuation de l'humidité provenant du séchage de la bande de carton ondulé 5 car cette humidité peut se diffuser au travers des poils des brosses, ce qui n'est pas possible lors de l'utilisation de presseurs compacts.

## Revendications

1. Dispositif pour la mise en charge d'un tapis presseur (3) sans fin dans une machine pour la fabrication du carton ondulé comprenant une ou plusieurs tables chauffantes inférieures (4) sur la surface desquelles se déplace une bande de carton ondulé (5), dont la bande de papier de recouvrement supérieure (22) vient d'être déposée sur les ondulations (21) préalablement encollées, le tapis presseur (3) se déplaçant à la même vitesse linéaire que la bande de carton ondulé (5) en appuyant sur la bande de papier de recouvrement (22) et des organes de mise en charge (1) du tapis presseur (3) agissant sur le tapis presseur (3), caractérisé en ce que les organes de mise en charge (1) du tapis presseur (3) sont constitués uniquement par des éléments autorisant, au travers d'eux, la diffusion de l'humidité contenue dans la bande de carton ondulé (5) et en ce que ces divers éléments sont réalisés de façon à permettre l'ajustage de leur force de pression sur la face supérieure du brin inférieur du tapis presseur (3).

2. Dispositif selon la revendication 1, caractérisé en ce que les éléments autorisant, au travers d'eux, la diffusion de l'humidité contenue dans la bande de carton ondulé (5) sont constitués par au moins une barre transversale (23), montée de façon à pouvoir pivoter et être bloquée en position entre deux bâtis latéraux (6, 7), et par au moins une brosse (26, 28 à 28b, 29, 30, 41).

3. Dispositif selon la revendication 2, caractérisé en ce que la brosse (26) est fixée à la barre transversale (23), attachée à des leviers pivotants (24, 25), et en ce que la brosse (26) a une longueur égale à celle de la barre transversale (23).

4. Dispositif selon la revendication 2, caractérisé en ce que les brosses (28 à 28b) sont reliées à une poutre transversale pivotante (27) au moyen d'une lame ressort (8), en ce que les brosses (28 à 28b) sont de longueurs différentes et en ce que la poutre transversale (27) est équipée d'un dispositif de butée (9, 10) et de blocage pour limiter sa rotation vers le bas.

5. Dispositif selon la revendication 2, caractérisé en ce que les brosses (29) sont montées de façon à pouvoir coulisser verticalement dans une poutrelle tubulaire (12) contenant une chambre de expansible (13) agissant, sous l'effet d'un fluide, contre la face supérieure de la brosse (29), la poutrelle tubulaire (12) étant reliée rigidement à la poutre transversale (27).

6. Dispositif selon la revendication 2, caractérisé en ce que les brosses (30) sont montées dans un cadre (14) pouvant se déplacer verticalement dans un berceau (31), fixé rigidement aux bâtis latéraux (6, 7) par des pattes de fixation (33, 34), ledit berceau (31) étant équipé d'une chambre expansible (13) agissant, sous l'effet d'un fluide, contre la face supérieure du cadre (14).

7. Dispositif selon la revendication 6, caractérisé en ce que les brosses (30) sont montées en damier sur des barres transversales (37) du cadre (14) et qu'elles sont reliées à ces barres transversales (37) par des lames ressort (40).

8. Dispositif selon la revendication 1, caractérisé en ce que l'un ou l'autre des éléments autorisant, au travers d'eux, la diffusion de l'humidité contenue dans la bande de carton ondulé (5) peut être sélectivement mis hors service.

9. Dispositif selon la revendication 1, caractérisé en ce que la pression exercée par chacun des éléments autorisant, au travers d'eux, la diffusion de l'humidité contenue dans la bande de carton ondulé (5) peut être ajustée collectivement ou individuellement.

## Claims

1. Device for loading an endless pressure belt (3) located in a corrugated board manufacturing machine, that includes one or several lower heating plates (4) on the surface of which travels a corrugated board web (5) whose upper cover paper web (22) has just been applied on the pre-glued corrugations (21), the pressure belt (3) which travels at the same linear speed as the corrugated board web (5) and presses onto the cover paper web (22), as well as organs (1) for loading the pressure belt (3), the latter organs having to act on the pressure belt (3), characterized by the fact that the organs (1) for loading the pressure belt (3) consist solely of elements that permit, through them, the removal of humidity residing in the corrugated board web (5) and by the fact that these different elements are realized so as to allow the adjustment of their pressure force on the upper face of the lower side of the pressure belt (3).

2. Device according to claim 1, characterized by the fact that the elements that permit, through them, the removal of humidity residing in the corrugated board web (5) consist of at least a crosswise bar (23), fitted so as to be able to pivot and to be locked in position between two lateral frames (6, 7) and of at least a brush (26, 28 to 28b, 29, 30, 31).

3. Device according to claim 2, characterized by the fact that the brush (26) is fitted to the crosswise bar (23) which is attached to pivoting levers (24, 25), and by the fact that the brush (26) has a length equal to the one of the crosswise bar (23).

4. Device according to claim 2, characterized by the fact that the brushes (28 to 28b) are linked to a crosswise pvivoting beam (27) by means of an elastic blade (8), by the fact that the brushes (28 to 28b) have different lengths and by the fact that the crosswise beam (27) is equipped with a stopping (9, 10) and locking device in order to limit its downward rotation.

5. Device according to claim 2, characterized by the fact that the brushes (29) are fitted so as to be able to slide vertically in a tubular beam (12) containing an expandable chamber (13) which acts on the upper side of the brush (29) under the action of a fluid, the tubular beam (12) being rigidly linked to the crosswise beam (27).

6. Device according to claim 2, characterized by the fact that the brushes (30) are fitted in a frame (14) which can move vertically in a cradle (31) which is rigidly fitted on the lateral frames (6, 7) by means of fastening clips (33, 34), the said cradle (31) being equipped with an expandable chamber (13) which acts on the upper side of the frame (14) under the action of a fluid.

7. Device according to claim 6, characterized by the fact that the brushes (30) are arranged in a checkerboard pattern onto crosswise bars (37) of the frame (14) and that they are linked to these crosswise bars (37) by means of elastic blades (40).

8. Device according to claim 1, characterized by the fact that the one or the other of the elements that permit, through them, the removal of humidity residing in the corrugated board web (5) may selectively be rendered inoperative.

9. Device according to claim 1, characterized by the fact that the pressure exerted by every element that permit, through them, the removal of humidity residing in the corrugated board web (5) may be adjusted collectively or individually.

## Patentansprüche

1. Vorrichtung zur Belastung eines Endlospressbandes (3) in einer Maschine zur Herstellung von Wellpappe mit einer oder mehreren unteren Heiztischen (4), über deren Oberfläche eine Wellpappenbahn (5) läuft, dessen obere Deckpapierbahn (22) auf die vorgängig beleimten Wellungen (21) aufgetragen wird, wobei das besagte Pressband (3) sich mit der gleichen Lineargeschwindigkeit wie die Wellpappenbahn (5) bewegt und dabei auf die Deckpapierbahn (22) sowie auf das besagte Pressband (3) einwirkende Belastungsorgane (1) des Pressbandes (3), drückt, dadurch gekennzeichnet, dass die Belastungsorgane (1) des Pressbandes (3) nur Bestandteile umfassen, die durch sich selbst hindurch die Beseitigung der in der Wellpappenbahn (5) enthaltenen Feuchtigkeit ermöglichen, und dass die verschiedenen Bestandteile so gestaltet sind, dass sie das Regulieren der Druckkraft auf der Oberseite des unteren Trumms des Pressbandes (3) ermöglichen.

2. Vorrichtung gemäss Patentanspruch 1, dadurch gekennzeichnet, dass die Bestandteile, welche durch sich selbst hindurch die Beseitigung der in der Wellpappenbahn (5) enthaltenen Feuchtigkeit ermöglichen, aus mindestens einer Querstange (23), die so montiert ist, dass sie gedreht und zwischen den beiden Seitengestellen (6, 7) blockiert werden kann, sowie mindestens einer Bürste (26, 28 bis 28b, 29, 30, 41) bestehen.

3. Vorrichtung gemäss Patentanspruch 2, dadurch gekennzeichnet, dass die Bürste (26) an der an Drehhebeln (24, 25) angebrachten Querstange (23) befestigt ist, und dass die Bürste (26) eine gleich grosse Länge aufweist wie die Querstange (23).

4. Vorrichtung gemäss Patentanspruch 2, dadurch gekennzeichnet, dass die Bürsten (28 bis 28b) mittels einer Flachfeder (8) mit einem drehbaren Querbalken (27) verbunden sind, dass die Bürsten (28 bis 28b) verschiedene Längen aufweisen, und dass der Querbalken (27) mit einer Anschlag- und Sperrvorrichtung (9,10) ausgerüstet ist, um ein Drehen nach unten zu begrenzen.

5. Vorrichtung gemäss Patentanspruch 2, dadurch gekennzeichnet, dass die Bürsten (29) so eingebaut sind, dass sie in einem Hohlbalken (12) mit einer dehnbaren Kammer (13), die unter der Einwirkung einer Flüssigkeit gegen die Oberseite der Bürste (29) wirkt, vertikal gleiten kann, wobei der Hohlbalken (12) fest mit dem Querbalken (27) verbunden ist.

6. Vorrichtung gemäss Patentanspruch 2, dadurch gekennzeichnet, dass die Bürsten (30) in einen Rahmen (14) eingebaut sind, der sich in einer Wiege (31) vertikal bewegen kann, die mittels Befestigungslaschen (33,34) fest mit den Seitengestellen (6,7) verbunden ist, wobei die besagte Wiege (31) mit einer dehnbaren Kammer (13), die unter Einwirkung einer Flüssigkeit gegen die Oberseite des Rahmens (14) wirkt, ausgerüstet ist.

7. Vorrichtung gemäss Patentanspruch 6, dadurch gekennzeichnet, dass die Bürsten (30) an den Querstangen (37) des Rahmens (14) schachbrettartig angeordnet sind, und dass dieselben mittels Flachfedern (40) mit den besagten Querstangen (37) verbunden sind.

8. Vorrichtung gemäss Patentanspruch 1, dadurch gekennzeichnet, dass der eine oder andere Bestandteil, welcher durch sich selbst hindurch die Beseitigung der in der Wellpappenbahn (5) enthaltenen Feuchtigkeit ermöglicht, wahlweise ausser Betrieb gesetzt werden.

9. Vorrichtung gemäss Patentanspruch 1, dadurch gekennzeichnet, dass der durch jeden der Bestandteile, die durch sich selbst hindurch die Beseitigung der in der Wellpappenbahn (5) enthaltenen Feuchtigkeit ermöglichen, ausgeübte Druck gesamthaft oder einzeln reguliert werden kann.
